# EUROPÄISCHE PATENTSCHRIFT

(11) **EP 0 557 304 B1**
(45) Veröffentlichungstag und Bekanntmachung des Hinweises auf die Patenterteilung: **20.04.1994**
(21) Anmeldenummer: 91918154.5
(22) Anmeldetag: 28.10.1991
(51) Int. Cl.: G01N 29/00

(54) **ROTOR EINER ULTRASCHALLPRÜFEINRICHTUNG FÜR ROTATIONSSYMMETRISCHE PRÜFSTÜCKE MIT MINDESTENS EINER BOHRUNG FÜR EINEN PRÜFKOPFTRÄGER**
ROTOR OF AN ULTRASONIC TESTING DEVICE FOR ROTATION-SYMMETRICAL TEST-PIECES WITH AT LEAST ONE DRILLING FOR A TEST HEAD SUPPORT
ROTOR D'UN DISPOSITIF DE CONTROLE PAR ULTRASONS POUR EPROUVETTES SYMETRIQUES EN ROTATION, PRESENTANT AU MOINS UN ALESAGE POUR UN PORTE-PALPEUR

(30) Priorität: 12.11.1990 DE 4036005
(43) Veröffentlichungstag der Anmeldung: 01.09.1993
(73) Patentinhaber: Krautkrämer GmbH, D-50328 Hürth (DE)
(72) Erfinder: PRAUSE, Reinhard, D-5205 St. Augustin (DE); PATZKE, Ottokar, D-5042 Erftstadt-Lieblar (DE); MIETZNER, Rudolf, D-5030 Hürth (DE)
(74) Vertreter: Bauer, Wulf, Dr.
(86) Internationale Anmeldenummer: DE9100839
(87) Internationale Veröffentlichungsnummer: WO9208970

(56) Entgegenhaltungen:
- EP-A- 0 045 265
- DE-U- 9 010 086
- US-A- 4 699 007

## Beschreibung

Die Erfindung bezieht sich auf einen Rotor einer Ultraschall-Prüfeinrichtung nach dem Oberbegriff des Patentanspruchs 1. Bei diesem aus der DE-U-901 0066 vorbekannten Rotor sind die Prüfkopfträger winkeleinstellbar, dadurch lassen sich Schrägfehler erfassen, die innerhalb eines vorgegebenen Winkelbereichs liegen.

In der Praxis hat sich nun gezeigt, daß Schrägfehler häufig so auftreten, daß sie in einem Pluswinkelbereich, gemessen zur Prüfstückachse, und in einem zahlenmäßig gleichen, jedoch negativen Winkelbereich vorliegen.

Hier setzt nun die Erfindung ein. Sie hat es sich zur Aufgabe gemacht, um in Ergänzung zu den bestehenden Prüfmöglichkeiten die Erfassung solcher Schrägfehler, die sowohl in einem Pluswinkelbereich (gemessen zur Prüfstückachse) als auch in einem zahlenmäßig gleichen, jedoch negativen Winkelbereich auftreten, zu vereinfachen. Diese Aufgabe wird gelöst durch einen Rotor mit den Merkmalen des Patentanspruchs 1.

Durch den ersten Prüfkopfträger des Paars können gezielt die Schrägfehler in einem Pluswinkelbereich (zur Prüfstückachse) und durch den zweiten Prüfkopfträger die Schrägfehler im zahlenmäßig gleichen, jedoch negativen Winkelbereich erfaßt werden. Durch das von außen einstellbare Zusammenspiel der beiden Prüfkopfträger ist man in der Lage, Schrägfehler einer gewünschten Orientierung zu erfassen. Dabei kann die erfindungsgemäße Vorrichtung rasch an die jeweilige Prüfaufgabe angepaßt werden.

Schrägfehler treten beispielsweise auf bei der Herstellung von Rohren oder Stangen im Strangguß- oder Strangziehverfahren, wenn der Herstellungsvorgang zusätzlich noch mit einer Drehung (Torsion) erfolgt. Die allgemein flächigen Fehler können noch unterschiedlich zu ihrer jeweiligen Winkellage gegenüber der Prüfstückachse geneigt verlaufen. Um hier ein sicheres Erfassen zu ermöglichen, wird in einer Weiterbildung vorgeschlagen, in jedem Prüfkopfträger zwei baugleiche Prüfköpfe vorzusehen, deren zentrale Prüfstrahlen in einer Ebene liegen, die vorzugsweise durch die Mittelachse der beiden Bohrungen des Paares Prüfkopfträger verläuft.

Dabei ist es besonders vorteilhaft, wenn sich die zentralen Prüfstrahlen der Prüfköpfe eines Paars in einem Schnittpunkt schneiden, der sich in einigen Zentimetern Entfernung vor den Prüfköpfen befindet. Dieser Schnittpunkt wird bei der praktischen Prüfung so justiert, daß er auf der Scheitellinie oder in Nähe der Scheitellinie eines Prüfstücks liegt. Dadurch ändert sich beim Drehen der beiden Prüfkopfträger eines Paars die Geometrie beim Einschallen praktisch nicht, dies ist ein großer Vorteil.

Weiterhin hat es sich als vorteilhaft erwiesen, jeweils ein Paar Prüfkopfträger in einem zylindrischen Prüfkopfhalter anzuordnen, der die beiden Bohrungen für die Prüfkopfträger aufweist und seinerseits in einer Aufnahmebohrung des Rotors angeordnet ist, den Drehantrieb einschließlich Betätigung aufnimmt und in der Aufnahmebohrung längsverstellbar abgedichtet angeordnet ist. Hierdurch lassen sich die beiden Prüfkopfhalter eines Paares gemeinsam in Längsrichtung der Bohrungen verstellen, weiterhin vereinfachen sich die konstruktive Ausführung und Handhabung.

Pro Prüfkopfträger können auch mehr als zwei Prüfköpfe, die vorzugsweise baugleich sind, vorgesehen sein. Vorteilhaft ist eine geradzahlige Anzahl von Prüfköpfen. Vorzugsweise sind sie gleichverteilt auf einem Teilkreis angeordnet.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: einen Axialschnitt (schematisiert) durch einen Rotor mit einem Paar Prüfkopfträger, die jeweils zwei Prüfköpfe aufweisen,
- Fig. 2: eine Ansicht entsprechend der Linie II - II in Fig. 1,
- Fig. 3: ein Schnittbild im Bereich der Schnittlinie III - III in Fig. 1,
- Fig. 4: eine schematische Darstellung zur Erläuterung des Verfahrensablaufs, gezeigt ist ein zylindrisches Prüfstück, oberhalb dessen sich zwei Prüfkopfträger mit jeweils zwei, 180 Grad versetzten Prüfköpfen befinden und
- Fig. 5: eine perspektivische Darstellung in Stirnansicht auf eine Anordnung entsprechend Fig. 4, gezeigt sind jedoch nur zwei Prüfköpfe eines ansonsten nicht näher dargestellten Prüfkopfträgers.

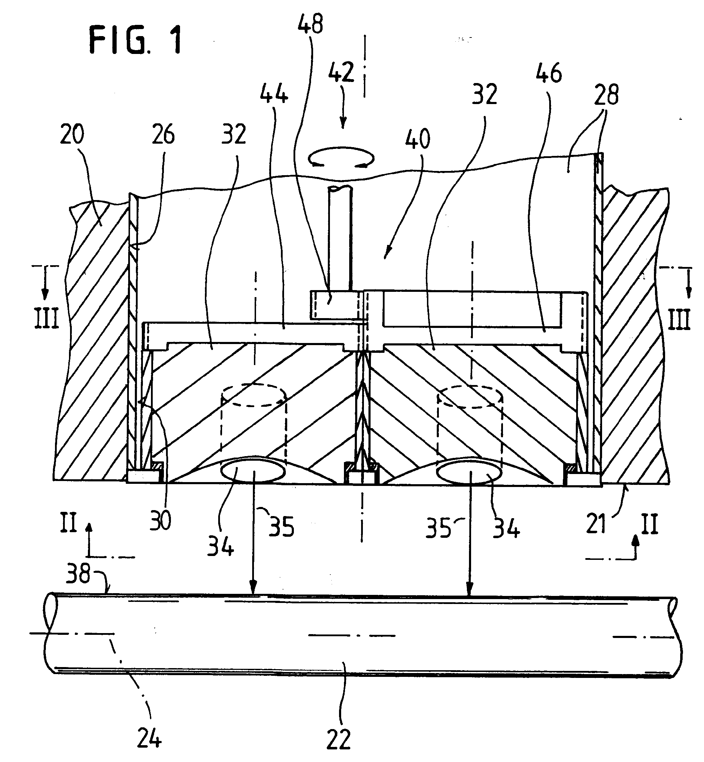

Im gezeigten Ausführungsbeispiel, insbesondere Fig. 1, ist ein Teilstück eines Rotors 20 gezeigt, der um ein Prüfstück 22 gedreht werden kann, das seine Hauptbohrung 21 durchläuft. Die Achse 24 dieses Prüfstücks fällt mit der Drehachse des Rotors zusammen. Im Rotor 20 ist eine radiale Aufnahmebohrung 26 ausgebildet, diese läuft durch, reicht also von der Außenmantelfläche des Rotors bis zu seiner Innenmantelfläche. In sie ist ein Träger 28 eingesetzt. Er kann in Richtung der Achse der Aufnahmebohrung 26 verschoben werden, hierzu ist eine Einstellvorrichtung (nicht dargestellt, da Stand der Technik) vorgesehen.

Im Träger 28 sind im gleichen Abstand von der Achse der Aufnahmebohrung 26 und parallel hierzu zwei Bohrungen 30 vorgesehen, deren Mittelpunkte in Richtung der Prüfstückachse 24 versetzt sind und die möglichst nahe nebeneinander liegen. Die Mittelachse dieser beiden Bohrungen 30 fällt mit der Achse der Aufnahmebohrung 26 zusammen. In jeder Bohrung 30 befindet sich ein Prüfkopfträger 32, die beiden Prüfkopfträger 32 bilden ein Paar und sind baugleich. Jeder Prüfkopfträger 32 hat zwei Prüfköpfe 34, auch diese sind baugleich, sie sind auf einem Teilkreis um die Achse der Bohrung 30 angeordnet, 180 Grad gegeneinander versetzt und zum Prüfstück 22 gerichtet. Im Prüfkopfträger 32 sind sie schräg angeordnet mit der Folge, daß sich ihre zentralen Prüfstrahlen 35 in einem Schnittpunkt 36 schneiden. Anders ausgedrückt verlaufen die zentralen Prüfstrahlen 35 der beiden Prüfköpfe 34 eines Prüfkopfträgers 32 V-förmig aufeinander zu. Der Schnittpunkt 36 befindet sich auf dem Scheitel 38 des zylindrischen Prüfstücks 22, unabhängig von der Drehorientierung der beiden Prüfköpfe 34 jedes Prüfkopfträgers 32.

Die beiden Prüfkopfträger 32 eines Paars sind drehverbunden. Hierzu ist ein Drehantrieb 40 vorgesehen, der auf beide Prüfkopfträger 32 wirkt und eine Betätigung 42 aufweist, die an der Außenmantelfläche des Rotors 20 zugänglich ist, beispielsweise dort als ein Vielkant ausgeführt ist.

Der Drehantrieb 40 kann in beliebiger Weise konstruktiv ausgelegt sein sofern er die Forderung erfüllt, daß beide Prüfkopfträger 32 miteinander drehverbunden sind dergestalt, daß die Drehung eines Prüfkopfträgers 32 um einen gewissen Winkel eine Drehung des anderen Prüfkopfträgers des Paars um den gleichen Winkel bewirkt. Dabei sind jedoch die Drehrichtungen der beiden Prüfkopfträger eines Paars gegensinnig.

Im konkret gezeigten Ausführungsbeispiel ist am radial außenliegenden Ende jedes Prüfkopfträgers 32 ein stirnverzahntes Zahnrad 44, 46 vorgesehen. Sein Durchmesser entspricht dem Durchmesser der Bohrung 30. Die beiden Zahnräder 44, 46 sind miteinander im Eingriff, winkelmäßig sind sie um einen halben Zahnabstand gegeneinander versetzt. Sie bewirken eine Drehverbindung der beiden Prüfköpfe 34 des Paars. Das Zahnrad 46 des in Fig. 1 rechts eingezeichneten Prüfkopfträgers 32 hat eine größere axiale Länge, es wird zugleich für den Antrieb genutzt. Hierzu greift ein Antriebsrad 48, das ebenfalls stirnverzahnt ist, in den oberen Bereich des Zahnrades 46 ein, das Antriebsrad 48 ist - unter Zwischenschaltung eines Untersetzungsgetriebes, das hier nicht näher ausgeführt ist - mit der Betätigung 42 des Drehantriebes 40 verbunden. Dort ist auch eine Skala vorgesehen, auf der die jeweilige Drehposition der Prüfköpfe 34 bzw. der Prüfkopfträger 32 ablesbar ist. Diese Dinge gehören zum Stand der Technik und sind daher nicht näher ausgeführt.

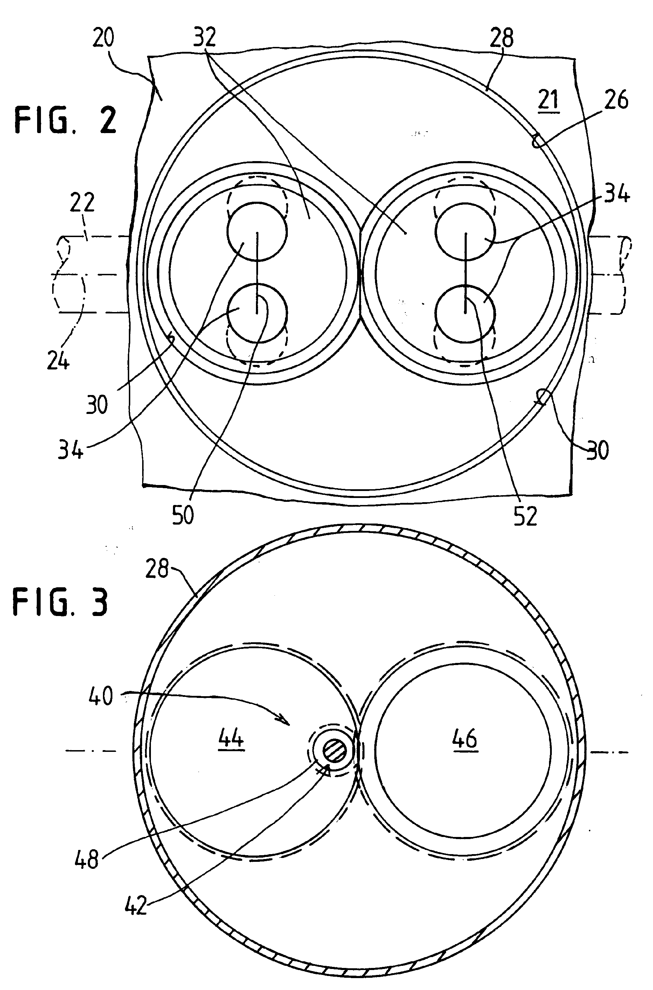

Fig. 2 zeigt einen Blick radial nach aupen auf die beiden Prüfkopfträger 32 und den Rotor 20. Die Verbindungslinie 50, 52 der beiden Prüfköpfe 34 beider Prüfkopfträger 32 verläuft in einem Winkel von ca. 90 Grad zur Rotationsachse des Rotors 20. Die beiden Prüfkopfträger 32 werden im praktischen Betrieb so justiert, daß die Winkellage absolut genommen den gleichen Wert hat, sich aber im Vorzeichen unterscheidet. Dies hat den Effekt, daß mit dem einen Prüfkopfträger die Schrägfehler in der Pluswinkellage auffindbar sind, während der andere Prüfkopfträger entsprechende Fehler in der Minuswinkellage erfaßt.

Fig. 3 zeigt den Drehantrieb 40. Zu erkennen sind die beiden Zahnräder 44, 46, die im wesentlichen, bis auf eine unterschiedliche radiale Ausdehnung, baugleich sind. Mit dem rechten Zahnrad 46 steht das Antriebsrad 48 in Eingriff, es ist seinerseits mit einer Stange drehverbunden, die zur die Betätigung 42 gehört.

Werden die beiden Prüfköpfe 34 jedes Prüfkopfträgers 32 so ausgerichtet, daß ihre Verbindungslinie 50, 52 rechtwinklig zur Prüfstückachse 24 verläuft, so können Längsfehler erfaßt werden. Dies entspricht der Darstellung gem. Fig. 1. Werden die beiden Prüfköpfe 34 jedes Prüfkopfträgers 32 dagegen so ausgerichtet, daß ihre Verbindungslinie 50, 52 parallel zur Prüfstückachse 24 verläuft, können Querfehler aufgefunden werden. Im zwischenliegenden Winkelbereich oberhalb 0 Grad und unterhalb 90 Grad, in der in jeder beliebigen Position die beiden Prüfkopfträger 32 fixiert werden können, werden Schrägfehler der jeweils zugehörigen Orientierung erfaßt.

Bei einer Drehung der beiden Prüfkopfträger 32 um 180 Grad wird meßtechnisch wieder derselbe Zustand erhalten wie zuvor.

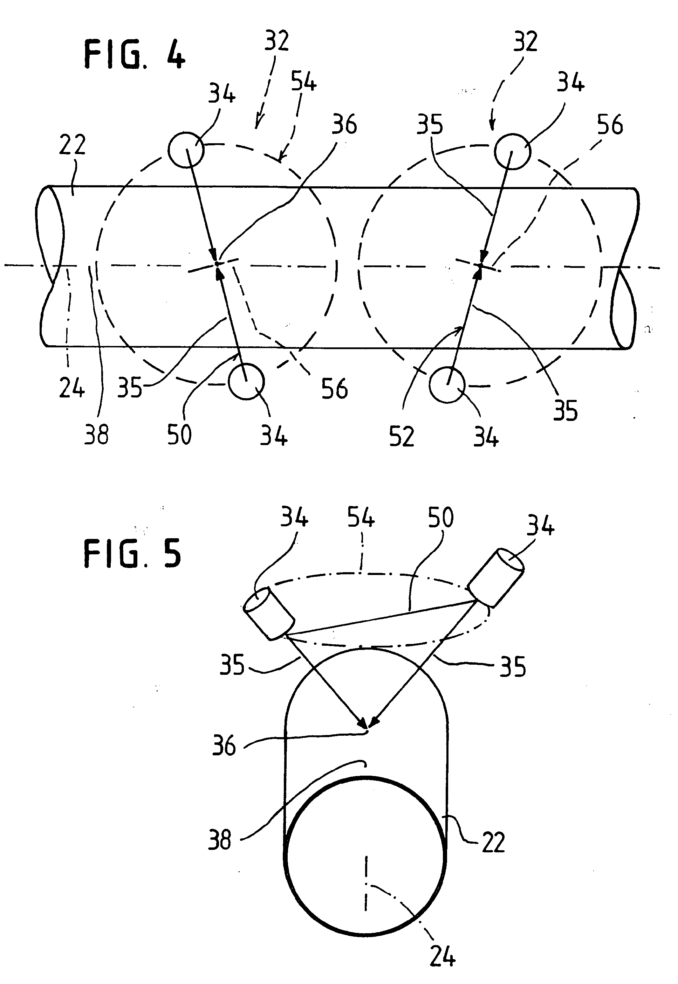

Das Meßverfahren wird nun anhand der schematischen Figuren 4 und 5 erläutert. Fig. 4 zeigt eine Draufsicht von oben, Fig. 5 eine entsprechende perspektivische Stirnansicht. Oberhalb des zylindrischen Prüfstücks 22 befinden sich zwei (bzw. nur einer in Fig. 5) nur durch ihre jeweiligen Prüfköpfe 34 und deren Bewegungskreis 54 angedeutete Prüfkopfträger 32. Die Prüfköpfe 34 jedes Prüfkopfträgers sind so ausgerichtet, daß ihre zentralen Prüfstrahlen 35 V-förmig zusammenlaufen zu einem Schnittpunkt 36, der sich in der hier gewählten Darstellung lotrecht unterhalb des Zentrums des Bewegungskreises 54 der beiden Prüfköpfe 34 befindet. Dieser Schnittpunkt liegt auf dem Scheitel 38 des zylindrischen Prüfstücks 22. Unmittelbar darunter befindet sich ein Schrägfehler 56. Er verläuft für das linke Paar Prüfköpfe 34 in einem Winkel von plus 15 Grad zur Prüfstückachse 24, im Fall der beiden Prüfköpfe 34 des anderen Prüfkopfträgers 32 des Paars (rechts in Fig. 4) in einem Winkel von minus 15 Grad zur Prüfstückachse 24. Die Verbindungslinie 50 bzw. 52 der beiden Prüfköpfe 34 verläuft im rechten Winkel hierzu. Dadurch treffen die zentralen Prüfstrahlen 35 den Schrägfehler 56 jeweils quer zu seiner Längsausdehnung. Da die Prüfköpfe 34 schräg einschallen, lassen sich mit ihnen bevorzugt solche Schrägfehler 56 nachweisen, die in radialer Richtung geneigt sind. Dadurch findet jeder der beiden Prüfköpfe 34 eines Prüfkopfträgers bevorzugt eine andere Neigungsausrichtung von Schrägfehlern 56 auf.

## Patentansprüche

1. Rotor einer Ultraschallprüfeinrichtung für rotationssymmetrische Prüfstücke (22), insbesondere für Rohre und Stangen, der mindestens ein Paar von zwei gegeneinander versetzten und eng benachbart angeordneten Bohrungen (30) für jeweils einen Prüfkopfträger (32) aufweist, wobei sich in jeder Bohrung (30) ein Prüfkopfträger (32) befindet, welcher a) in Richtung der Achse der Bohrung (30) längsverstellbar angeordnet ist, b) in der Bohrung (30) abgedichtet gehalten ist und c) mindestens einen Prüfkopf (34) trägt, dadurch gekennzeichnet, daß jedem Prüfkopfträger (32) eines Paares ein Drehantrieb (40) zugeordnet ist, der eine gemeinsame, an der Außenmantelfläche des Rotors (20) zugängliche Betätigung (42) aufweist und der eine synchrone, gegensinnige Drehung der beiden Prüfkopfträger des Paares um die jeweilige Achse der Bohrung (30) ermöglicht, so daß durch den ersten Prüfkopfträger (32) des Paars die Schrägfehler (56) in einem Pluswinkelbereich zur Prüfstückachse (24) und durch den zweiten Prüfkopfträger (32) die Schrägfehler im zahlenmäßig gleichen, jedoch negativen Winkelbereich erfaßt werden.

2. Rotor nach Anspruch 1, dadurch gekennzeichnet daß in jedem Prüfkopfträger (32) zwei baugleiche Prüfköpfe (34) vorgesehen sind, deren zentrale Prüfstrahlen (35) in einer Ebene liegen, die vorzugsweise durch die Mittelachse der beiden Bohrungen (30) des Paares Prüfkopfträger (32) verläuft.

3. Rotor nach Anspruch 1 oder 2, dadurch gekennzeichnet, daß jedes Paar Prüfkopfträger (32) in einem zylindrischen Träger (28) angeordnet ist, der die beiden Bohrungen (30) für die Prüfkopfträger (32) aufweist und seinerseits a) in einer Aufnahmebohrung (26) des Rotors (20) angeordnet ist, b) den Drehantrieb (40) einschließlich Betätigung (42) aufnimmt und c) in der Aufnahmebohrung (26) längsverstellbar und abgedichtet angeordnet ist.

4. Rotor nach Anspruch 2 oder 3, dadurch gekennzeichnet, daß die zentralen Prüfstrahlen (35) der Prüfköpfe (34) eines Paars sich in einem Schnittpunkt (36) schneiden, der sich in einigen Zentimetern Entfernung vor den Prüfköpfen (34) befindet.

5. Rotor nach einem der Ansprüche 1 bis 4, dadurch gekennzeichnet, daß sich in jedem Prüfkopfträger (32) auf einem Kreis gleichverteilt angeordnet vier, sechs oder eine höhere geradzahlige Anzahl von Prüfköpfen (34) befinden, wobei vier Prüfköpfe (34) eine bevorzugte Ausführung darstellen.

6. Rotor nach einem der Ansprüche 1 bis 5, dadurch gekennzeichnet, daß mehrere Paare Prüfkopfträger (32) im gleichen Teilungswinkel angeordnet sind.

7. Rotor nach einem der Ansprüche 1 bis 6, dadurch gekennzeichnet, daß in einer Drehposition der beiden Prüfkopfträger (32) eines Paars die zentralen Prüfstrahlen (35) rechtwinklig zur Achse des Prüfstücks (22) laufen.

8. Rotor nach einem der Ansprüche 1 bis 7, dadurch gekennzeichnet, daß die Prüfköpfe (34) der beiden Prüfkopfträger (32) eines Paars bei Einstellung im gleichen absoluten Winkel sich im gleichen Abstand von einem Prüfstück (22) befinden.

9. Rotor nach einem der Ansprüche 1 bis 8, dadurch gekennzeichnet, daß die Prüfköpfe (34) eines Prüfkopfträgers (32) in einem Winkel von 10 bis 25 Grad, vorzugsweise 17 Grad zur Achse der Bohrung (30) ausgerichtet sind.

10. Rotor nach einem der Ansprüche 1 bis 9, dadurch gekennzeichnet, daß die Prüfköpfe (34) eines Prüfkopfträgers (32) durch eine Verstellvorrichtung für ihren Neigungswinkel quer zur Achse der Bohrung (30) und der Rotationsachse des Rotors (20) miteinander verbunden sind, die es gestattet, die Prüfköpfe (34) in einem Winkel zwischen gröper 0 Grad und kleiner 45 Grad einzustellen.

## Claims

1. Rotor of an ultrasonic test device for rotationally symmetrical test pieces (22), especially for tubes and bars, which has at least one pair of two closely neighboring bores (30), which are staggered relative to each other, for holding one test probe mount (32) each, such that a test probe mount (32) is positioned in each bore (30), which test probe mount a) can be longitudinally adjusted in the direction of the axis of the bore (30), b) is sealed in the bore (30) by a gasket, and c) holds at least one test probe (34), characterized by the fact that a rotational drive (40) is assigned to each test probe mount (32) of a pair, which rotational drive (40) has a common control (42) that is accessible on the outer cylindrical surface of the rotor (20) and allows synchronous, opposing rotation of the two test probe mounts of the pair about the given axis of the bore (30), so that the oblique defects (56) in a positive angular range relative to the axis (24) of the test piece can be detected by the first test probe mount (32) of the pair, and the oblique defects in the numerically equal, but negative angular range can be detected by the second test probe mount (32).

2. Rotor in accordance with Claim 1, characterized by the fact that each test probe mount (32) holds two identically designed test probes (34), whose central test beams (35) lie in a plane, which preferably runs through the center axis of the two bores (30) of the pair of test probe mounts (32).

3. Rotor in accordance with Claim 1 or 2, characterized by the fact that each pair of test probe mounts (32) is positioned in a cylindrical mount (28), which contains the two bores (30) for the test probe mounts (32) and in turn a) is positioned in a mounting bore (26) of the rotor (20), (b) holds the rotational drive (40), including the control (42), and (c) is sealed in the mounting bore (26) in such a way that it can be moved in the longitudinal direction.

4. Rotor in accordance with Claim 2 or 3, characterized by the fact that the central test beams (35) of the test probes (34) of a pair intersect in a point of intersection (36), which is located a few centimeters in front of the test probes (34).

5. Rotor in accordance with any of Claims 1 to 4, characterized by the fact that four, six or a greater, even number of test probes (34) are uniformly circularly distributed in each test probe mount (32), and that four test probes (34) are preferred.

6. Rotor in accordance with any of Claims 1 to 5, characterized by the fact that several pairs of test probe mounts (32) are arranged at an equal spacing angle.

7. Rotor in accordance with any of Claims 1 to 6, characterized by the fact that in a rotational position of the two test probe mounts (32) of a pair, the central test beams (35) run perpendicularly to the axis of the test piece (22).

8. Rotor in accordance with any of Claims 1 to 7, characterized by the fact that the test probes (34) of the two test probe mounts (32) of a pair, when set at the same absolute angle, are located at the same distance from a test piece (22).

9. Rotor in accordance with any of Claims 1 to 8, characterized by the fact that the test probes (34) of a test probe mount (32) are oriented at an angle of 10 to 25°, preferably 17°, to the axis of the bore (30).

10. Rotor in accordance with any of Claims 1 to 9, characterized by the fact that the test probes (34) of a test probe mount (32) are connected with each other by a device for adjusting their angle of inclination transverse to the axis of the bore (30) and the axis of rotation of the rotor (20), which makes it possible to adjust the test probes (34) at an angle greater than 0° and less than 45°.

## Revendications

1. Rotor d'un dispositif de contrôle par ultrasons pour éprouvettes (22) symétriques en rotation, notamment pour tuyaux et barres, présentant au moins une paire de deux alésages (30) décalés et proches l'un de l'autre pour respectivement un porte-palpeur (32), chaque alésage (30) comportant un porte-palpeur (32), lequel a) est disposé de manière à être réglé longitudinalement dans le sens de l'axe de l'alésage (30), b) est étanchéifié dans l'alésage (30) et c) porte au moins un palpeur (34), caractérisé par le fait qu'un entraînement rotatif (40) est affecté à chaque porte-palpeur (32) d'une paire, cet entraînement présentant un mécanisme d'actionnement (42) commun accessible sur la surface de la gaine extérieure du rotor (20) permettant une rotation synchrone et antagoniste des deux porte-palpeurs de la paire autour de l'axe respectif de l'alésage (30), de sorte que les défauts diagonaux (56) à travers le premier porte-palpeur (32) de la paire soient saisis dans une plage d'angle plus par rapport à l'axe de l'éprouvette (24) et que les défauts diagonaux à travers le deuxième porte-palpeur (32) soient saisis dans une même plage d'angle du point de vue chiffre mais toutefois négative.

2. Rotor selon la revendication 1, caractérisé par le fait que deux palpeurs (34) de type identique sont prévus dans chaque porte-palpeur (32) dont les rayons de contrôle centraux (35) se situent sur un plan qui traverse de préférence l'axe central des deux alésages (30) de la paire de porte-palpeurs (32).

3. Rotor selon la revendication 1 ou 2, caractérisé par le fait que chaque paire de porte--palpeurs (32) est disposée dans un support cylindrique (28) qui présente les deux alésages (30) pour les porte-palpeurs (32) et qui est a) disposé dans un alésage de logement (26) du rotor (20), b) reçoit l'entraînement rotatif (40), y compris le mécanisme d'actionnement (42) et c) est disposé dans l'alésage de logement (26) de manière étanchéifiée et réglable longitudinalement.

4. Rotor selon la revendication 2 ou 3, caractérisé par le fait que les rayons de contrôle centraux (35) des palpeurs (34) d'une paire se recoupent en un point d'intersection (36) qui se trouve à quelques centimètres de distance des palpeurs (34).

5. Rotor selon l'une des revendications 1 à 4, caractérisé par le fait que chaque porte-palpeur (32) comporte quatre, six ou un nombre pair plus élevé de palpeurs (34) disposés sur un cercle à même distance, quatre palpeurs (34) formant une variante préférée.

6. Rotor selon l'une des revendications 1 à 5, caractérisé par le fait que plusieurs paires de porte-palpeurs (32) sont disposées sur un même angle de division.

7. Rotor selon l'une des revendications 1 à 6, caractérisé par le fait que, dans une position rotative des deux porte-palpeurs (32) d'une paire, les rayons de contrôle centraux (35) sont perpendiculaires à l'axe de l'éprouvette (22).

8. Rotor selon l'une des revendications 1 à 7, caractérisé par le fait que les palpeurs (34) des deux porte-palpeurs (32) d'une paire se trouvent, lors du réglage dans le même angle absolu, à une même distance d'une éprouvette (22).

9. Rotor selon l'une des revendications 1 à 8, caractérisé par le fait que les palpeurs (34) d'un porte-palpeur (32) sont ajustés dans un angle de 10 à 25 degrés, de préférence 17 degrés, par rapport à l'axe de l'alésage (30).

10. Rotor selon l'une des revendications 1 à 9, caractérisé par le fait que les palpeurs (34) d'un porte-palpeur (32) sont reliés entre eux par un dispositif de réglage pour leur angle d'inclinaison perpendiculairement à l'axe de l'alésage (30) et à l'axe de rotation du rotor (20), permettant de régler les palpeurs (34) dans un angle compris entre supérieur à 0 degré et inférieur à 45 degrés.
